# EUROPÄISCHE PATENTSCHRIFT

(11) **EP 0 965 264 B1**
(45) Veröffentlichungstag und Bekanntmachung des Hinweises auf die Patenterteilung: **24.11.2004**
(21) Anmeldenummer: 99250194.0
(22) Anmeldetag: 18.06.1999
(51) Int. Cl.: A01G 9/24

(54) **Anlage und Verfahren zum Überführen und Nutzen von Wärme und/oder Wasserdampf aus Gewächshäusern und Solid-State-Fermentationsanlagen**
Device and method for transferring and using heat and/or water vapour from greenhouses and solid-state fermentators
Appareil et méthode pour le transfert et l'usage de la chaleur et/ou vapeur d'eau provenant des serres et des installations de fermentation à l'état solide

(30) Priorität: 18.06.1998 DE 19828907
(43) Veröffentlichungstag der Anmeldung: 22.12.1999
(73) Patentinhaber: Buchholz, Martin, 10435 Berlin (DE)
(72) Erfinder: Buchholz, Martin, 10435 Berlin (DE)

(56) Entgegenhaltungen:
- DE-A- 3 332 499
- US-A- 5 101 593
- US-A- 5 316 626
- PATENT ABSTRACTS OF JAPAN vol. 016, no. 351 (C-0968), 29. Juli 1992 (1992-07-29) & JP 04 108321 A (HITACHI LTD), 9. April 1992 (1992-04-09)
- PATENT ABSTRACTS OF JAPAN vol. 010, no. 336 (M-535), 14. November 1986 (1986-11-14) & JP 61 140747 A (SUMITOMO ELECTRIC IND LTD), 27. Juni 1986 (1986-06-27)
- PATENT ABSTRACTS OF JAPAN vol. 007, no. 068 (M-201), 19. März 1983 (1983-03-19) & JP 57 210248 A (HIROYUKI MORITA), 23. Dezember 1982 (1982-12-23)

## Beschreibung

Die Erfindung betrifft eine Anlage und Verfahren zum Überführen und Nutzen von Wärme und Wasserdampf aus Gewächshäusern und Solid-State-Fermentationsanlagen. Gewächshäuser können zusätzlich zur Funktion der gärtnerischen Anbaufläche als Strahlungswärmetauscher verwendet werden. Die entstehende thermische Energie kann dabei zu Heizzwecken sowie zum Wasserrecycling oder zur Meer- bzw. Brackwasserentsalzung eingesetzt werden. Eine wirtschaftliche Nutzung dieses Potentials wurde bisher durch folgende Probleme behindert:
- Pflanzenverträgliche Lufttemperaturen sind zu niedrig um sinnvolle Vorlauftemperaturen zur Wärmespeicherung zu erzielen.
- Bei nötiger Lüftung des Gewächshauses zur Kühlung, zur Abführung von Luftfeuchtigkeit und zur CO₂-Anreicherung der Raumluft als Pflanzennährstoff geht ein Großteil der eingestrahlten Energie verloren. Bis zu 80% der eingestrahlten Energie wird in der Wasserverdampfung umgesetzt und wird über die Lüftung mit entsprechendem Wasserverlust abgeführt.

Die Nutzung von erwärmter Luft und deren Umleitung in Speicher über Druckunterschiede ist aus der Gebäudeklimatisierung bekannt. So wird beispielsweise warme Luft aus dem Dachraum durch einen Schacht in den Sockelbereich des Gebäudes geführt. Die Bodenplatte wird hierdurch erwärmt und kann über eine Wärmepumpe energetisch erschlossen werden (DE 3740618 C2). Durch die geringe mögliche Oberfläche des Wärmetauschers und die vergleichsweise geringe Wärmekapazität etwa von Beton können in einem solchen System jedoch nur in beschränktem Maße Wärmesummen umgesetzt werden.

Neue biotechnische Anwendungen der Solid-State-Fermentation etwa bei der Delignifizierung von Stroh und Holzspänen, der Cellulase/β-Glucosidaseproduktion, der Glucoamylaseproduktion, der Zitronensäureproduktion existieren weitgehend auf Labormaßstab, wobei der energetische Wirkungsgrad oder der Wasserverbrauch noch keine signifikante Rolle spielt. Hierbei dominiert die Packed-Bed"-Methode bei der größere Substratschichten von einem unter der Anlage befindlichen Ventilator mit kühlender bzw. sauerstoffhaltiger Frischluft durchströmt werden. Weitere Methoden beschreiben einen vertikalen Zylinder mit innenliegenden Rührschaufeln, die größere Substratmengen periodisch wendet, so daß gleichmäßig Sauerstoff zugeführt, bzw. Wärme abgeführt werden kann. Bei den sog. Tray-Bioreaktoren werden die Substrate in sehr dünnen Schichten auf übereinandergestapelten Tabletts geschichtet, wobei Wärme und CO2 über die dazwischenliegenden Lufträume entweichen kann. Bei allen Varianten besteht mehr oder weniger das Problem des bei der großtechnischen Erschließung von Rohstoffen auf Biomassenbasis ausschlaggebenden, Fremdenergiebedarfs für Ventilatoren, Luftbefeuchter bzw. für Mischvorrichtungen, die den energetischen Wirkungsgrad der Anlagen senkt.

Die Nutzung von Kompostierungsanlagen zu Heizzwecken wird in einigen Anlagentypen beschrieben. Durch die direkte Einleitung von erwärmter Luft aus der Kompostiereinheit kann DE 3932765 nicht zur Beheizung von Wohngebäuden genutzt werden. DE 4336836 beinhaltet bei der Abführung von Wärme durch im Kompostsubstrat angeordnete Kühlschleifen nicht die Möglichkeit der Zuführung von Sauerstoff und in Temperatur und Feuchtigkeit geregelter Luft, die vor allem für höherwertige Fermentationsprozesse benötigt wird.

Die Nutzung von Kurzzeitwärmespeichern gehört zum Standard bei Gewächshäusern zur Nutzung des Sonnenpulses für Heizzwecke in der Nacht. Die Nutzung der Kälte der abgekühlten Speichermedien zur Wasserkondensation ist dabei nicht effektiv möglich, da die Kühlelemente direkt in den wärmsten Bereichen im oberen Teil des Gewächshauses installiert werden, wo entstehendes Kondenswasser von der direkt nachströmenden Warmluft wieder absorbiert wird. Es entsteht keine isolierte Zone abgekühlter Luft. Zudem führen im Gewächshaus installierte Wärmetauscher zur Verschattung der Vegetationsflächen.

Das Kühlen durch zusätzliche Evaporation durch Besprühung von Wege- und Bodenflächen, die Feinbesprühung der Luft bzw. die Bewässerung von Beschattungslamellen (z.B. DE 4311106) sowie ventilatorbetriebene Evaporationseinrichtungen benötigen bei fehlenden, systematischen Kondensationseinrichtungen die ständige, verlustreiche Abführung von energie- und feuchtigkeitsreicher Luft zur Aufrechterhaltung des Kühlmechanismus.

Geschlossene, künstliche Luftkreisläufe (z.B. zur Abführung von Wärme in ein Kiesbett) werden mit fremdenergiebetriebenen Ventilatoren erzeugt bzw. sind durch die erforderliche Größe der zu bauenden Kieskammer für Tag/Nacht Speicherung sehr kostenintensiv.

Absorptionswärmepumpen mit dem Effekt der chemischen Energiespeicherung sind bekannt (**Holldorff, G.**, Absorptionskälteanlage für räumlich und zeitlich unterschiedlichen Anfall von Heizenergie und Kältebedarf, in. Klima+Kälteingenieur, extra 14, Absorptionswärmepumpen", C.F. Müller Verlag Karlsruhe 1981). Die Kombination von thermischem und chemischem Speicher bei Erhitzung der armen Lösung durch Sonnenenergie im Sommer für Heizzwecke im Winter bei anschließender Tiefentladung der reichen Lösung unter Ausnutzung des chemischen Kältemittels im Winter für Kühlzwecke im Sommer im gleichen, temperaturzonierten Speicher ist in diesen Modellen nicht angedacht.

Die Nutzung von Grauwasser, v.a. für Bewässerungszwecke im Gartenbau und in der Landwirtschaft wird weltweit, vor allem bei knappen Süßwasserressourcen angewendet. Hygienische Probleme führen in verschiedenen Ländern zu unterschiedlichen Grenzwerten für bestimmte Nutzungen. In Deutschland sind Anlagen zur Ableitung von Grauwasser in Schilfbecken zur Verringerung des Abwasservolumens in Kanalisation und Kläranlage bekannt (z.B. Berlin, Wohnanlage Dessauer Straße). Die Wiederaufbereitung zu Trinkwasser geschieht jedoch nur über fremdenergiezehrende Destillatoren. Die Nutzung von Gewächshauspflanzen als Verdampfer wird dabei bisher nicht verfolgt.

Destillatoren mit getrennten Kammern für Verdunstung/Verdampfung bzw. Kondensation unter Ausnutzung des natürlichen Luftauftriebs für den Gasaustausch sind in verschiedenen Ausführungen bekannt. (z.B. DE 3829464)

Kombinationen aus Verdunstungs- und Kondensationskammern und Gewächshäusern (z.B. DE 3332499, DE 3829464) sind bisher wegen der bei pflanzenbedingten Blattemperaturen von max. 43°C unzureichenden Verdunstungsaktivitäten und wegen hygienischer Probleme bei zu hoher absoluter Luftfeuchtigkeit (z.B. Pilzbefall der Pflanzen) nicht wirtschaftlich zu betreiben.

Der Erfindung liegt die Aufgabe zugrunde, eine Anlage und ein Verfahren zum Überführen und Nutzen von Wärme und/oder Wasserdampf aus einem Gewächshaus und einer Solid-State-Fermentationsanlage bereitzustellen.

Diese Aufgabe wird gelöst mit den Merkmalen der Patentansprüche.

Die Erfindung geht insbesondere von dem folgenden Grundgedanken aus.

Durch den Anschluß eines Solarkamins an das Gewächshaus wird die Luft weiter erhitzt und führt dabei zu höheren, nutzbaren Lufttemperaturen. Durch ein anschließendes Kühlsegment in einem vom Gewächshaus getrennten Raum kann die Wärmesumme abgeführt und gleichzeitig die Luftfeuchtigkeit auskondensiert werden. In einer integrierten Fermentationsanlage wird CO₂ als Pflanzennährstoff sowie zusätzliche Wärmeenergie frei. Durch die Termperaturdifferenz zwischen Kamin und Kühlsegment entsteht ein Druckgefälle, welches einen Luftkreislauf zwischen Gewächshaus, Kamin, Wärmetauscher und Fermentationsmodul induziert. Das weitgehend geschlossene System kann durch die Abführung von Wärme, Feuchtigkeit und die interne Balance von CO₂ und Sauerstoff, bisherige lüftungsbedingte Wasserund Energieverluste minimieren.

Zur Abführung der im Gewächshaus an strahlungsreichen Tagen entstehenden, enormen Wärmesumme wird ein Kühlsystem benötigt, welches über ein modifiziertes Absorptionswärmepumpensystem erreicht wird: Der Austreibungs- und Kondensationsprozess wird während der Strahlungsphasen betrieben, wobei ein thermischer und ein chemischer Speicher beladen wird. Die Verdampfungs- und Absorptionsphase läuft zeitlich versetzt während der thermischen Nutzung der gespeicherten Energie in der Nacht bzw. in der Winterperiode ab. Der chemische Speicher hält dabei Kühlmittel bereit, welcher dem Wärmepumpenprinzip folgend den thermischen Speicher bis zu einer Temperatur von ca. 5°C abkühlt. Der gleiche Speicher bevorratet somit Wärme für den Heizbedarf wie auch Kälte für den Kühlbedarf des Lüftungskreislaufes.

Die Erfindung wird nachstehend anhand der Zeichnung näher erläutert. Es zeigen:

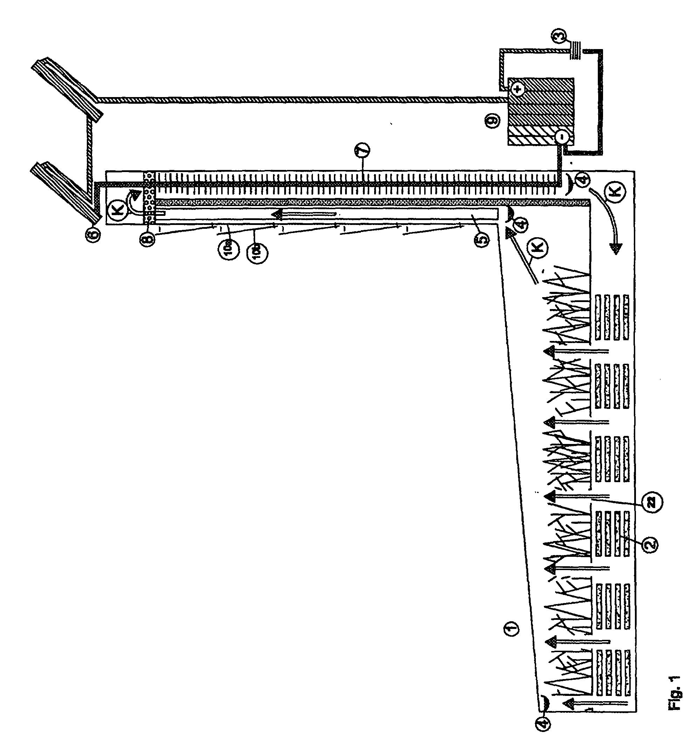

- Figur 1: einen Schnitt durch ein Gewächshaus, Solarkamin, Rückführschacht mit Wärmetauscher und Fermentationsanlage, 1: Gewächshaus, 2: Solid-State-Fermentationsanlage, 3: Verbraucher (z.B. Heizung) 4: Wasser-Auffangeinrichtungen, 5: Solarklamin, 6: Solarkollektoren, 7: Wärmetauscher, 8: Luftbefeuchter, 9: Thermischer Speicher, 10: Glaswand (10a: geschloßen, 10b: geöffnet) 22: Regelbare Lüftungsklappen, K: Luftkreislauf

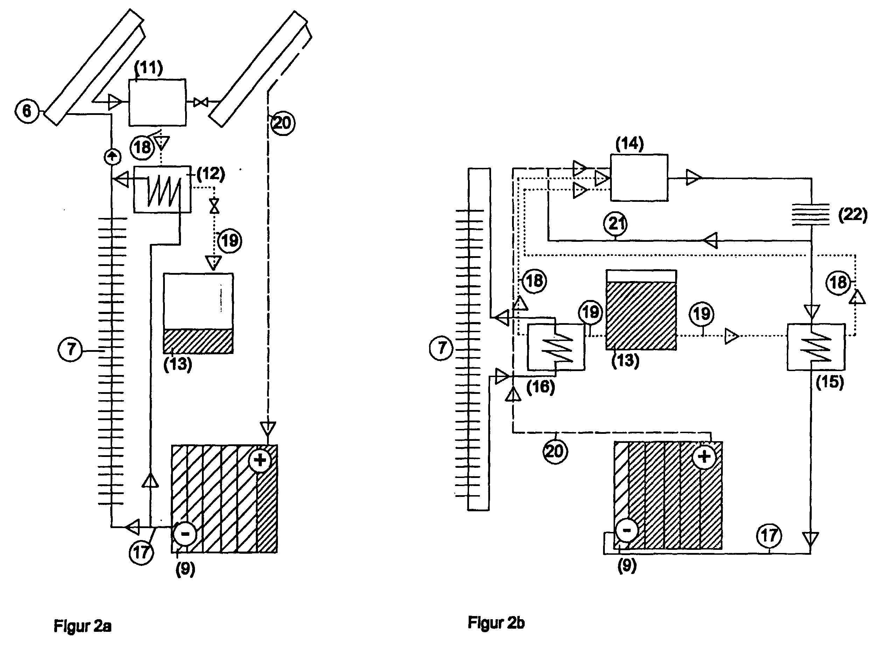

- Figur 2a: eine Prinzipdarstellung der Beladung eines thermischen Speichers und eines Amoniakspeichers durch einen Wärmetauscher im Luftkanal sowie durch weitere Solarkollektoren und
- Figur 2b: eine Prinzipdarstellung der Abkühlung eines thermischen Speichers bis auf 5°C zum Betrieb eines Luftkreislaufs durch die Erschließung von Restwärme aus einem Heizungsrücklauf und durch Hinzufügen einer weiteren Niedrigwärmequelle über Amoniakverdampfer. 11: Austreiber (Kocher), 12: Kondensator, 13: Ammoniakspeicher, 14: Absorber, 15: Verdampfer A, 16: Verdampfer B, 17: Kaltes/reiches Lösungsgemisch 18: Ammoniakdampf, 19: Ammoniak, flüssig 20: Heißes/armes Lösungsgemisch, 21: Rückführung von reicher, abgekühlter Lösung zum Absorber zur Temperaturanhebung

Die vorliegende Erfindung ist technisch anwendbar auf den folgenden technischen Gebieten:
- Strahlungswärmetauscher
- Wärmetauscher zur Nutzbarmachung von Abwärme biologischer Abbauprozesse
- Wärmetauscher zur Gewächshauskühlung
- Temperierung und Belüftung von Fermentationsanlagen
- Grauwasserrecycling
- Meerwasserentsalzung

Im folgenden wird die Funktionsweise der erfindungsgemäßen Anlage und des erfindungsgemäßen Verfahrens näher beschrieben.

Die Anlage besteht aus Produktionseinheiten (Gewächshaus und Solid-State-Fermentationsanlage), die über eine Luftströmung verbunden sind, welche durch die Temperaturdifferenz zwischen einem Solarkamin und einem Luft-Wasser-Wärmetauscher angetrieben wird. Am Wärmetauscher wird Wärmeenergie und Kondenswasser gewonnen und in einem anliegenden Haus verwendet. Grauwasser aus dem Gebäude kann in den Produktionseinheiten zur Bewässerung verwendet werden.

Energiequellen: Im Gewächshaus wird einfallende Sonnenenergie in Wärme umgewandelt, bzw. durch Verdunstung von Wasser über die Evapotranspiration der Vegetationsflächen in latente Wärme umgewandelt. Im Fermentationsraum wird Prozeßwärme frei, die als Wärme und über Verdunstung als latente Wärme an die umgebende Luft weitergegeben wird.

Ein Solarkamin an der Südfassade des Gebäudes ist mit dem Gewächshaus durch eine untere Öffnung verbunden. Durch den Auftrieb der warmen Gewächshausluft und deren weiteren Erwärmung im Solarkamin entsteht eine Luftbewegung aus dem Gewächshaus in den Solarkamin nach Oben.

Am oberen Ende des Kamins befindet sich ein Luftbefeuchter, in dem die im Solarkamin weiter erwärmte Luft zur Optimierung des nachfolgenden Kondensationsvorgangs mit Feuchtigkeit bis zur Sättigungsgrenze angereichert werden kann. Auf der Kaminrückseite oder im Gebäudeinneren ist ein Rückführschacht mit eingebautem Luft-Wasser-Wärmetauscher angeordnet. Hier wird die Luft abgekühlt. Gleichzeitig wird durch die Abkühlung der Kondensationsprozess der feuchten Luft eingeleitet, und somit die latente Wärme abgeschöpft.

Ein Wasserkreislauf beginnt bei der Evapotranspiration in den Vegetations- und Fermentationsbereichen und im Luftbefeuchter in gasförmiger Phase und erlangt zur Kondensation im Wärmetauscher. Auffangvorrichtungen (4) sammeln das Kondensat und führen es über Brauchwasserleitungen und Speicher zu den Verbrauchseinheiten im Gebäude. Über Grauwasserleitungen wird das Wasser zu den Vegetations- und Fermentationssubstraten zurückgeführt

Die Energiesumme wird an einen temperaturzonierten Wärmespeicher weitergeleitet. Die Kühlung des Wärmetauschers wird durch, nach dessen thermischer Nutzung in diesem Speicher zurückgehaltenem, abgekühltem Wasser hervorgerufen. Die so abgekühlte, weiterhin wasserdampfgesättigte Luft fällt durch einen Kanal auf Bodenhöhe in einen Fermentationsraum (z.B. unter den Gewächshaustischen) und wird durch den Sog des Kamins zurück in den Vegetationsbereich des Gewächshauses gezogen. Durch regelbare Lüftungsspalten an der Oberseite der Gewächshaustische kann der Vegetationsraum der Gewächshauspflanzen entlüftet werden, was zur optimalen Zuführung von CO₂ an die Blätter und zur optimalen Kühlung der Blattoberflächen beiträgt.

Das System kann entweder für die Funktion der Wasserdestillation oder zur Bevorratung von Wärme zu Heizzwecken optimiert werden. Zur weiteren Wasserdestillation kann, bei Verzicht auf weitere, externe Heizleistungen, v.a. in ariden Gebieten der Wärmespeicher in der Nacht über den Wärmetauscher entladen werden. Hierdurch wird der Luftkreislauf umgekehrt. Die Luft erwärmt sich im Rückführschacht, und wird bei geöffneter Glasfront des Kamins an den Innenflächen von geschlossenen Metallröhren, welche die Luft im Kamin führen, sowie an den Gewächshausaußenseiten wieder abgekühlt und strömt über das Fermentationsmodul zurück. Wasser kann über den Luftbefeuchter an der Kaminoberseite verdampft werden und kondensiert an den kühlen Flächen zur Außenluft, von wo aus es abgeführt und gesammelt werden kann.

Im vorgestellten System werden - wie in jedem thermischen Speichersystem zu Heizzwecken - möglichst hohe Temperaturen bis nahe 100°C bevorzugt. Allerdings soll der Speicher in einer Gegenphase möglichst kühles Wasser zur Erzeugung der Temperaturdifferenz im Wärmetauscher bevorraten. Zur Intensivierung der Speicherfunktion zu Heiz- und Kühlzwecken kann ein Absorptionswärmepumpensystem eingesetzt werden, welches den Betrieb des Verfahrens bei bestimmten Klimabedingungen überhaupt erst möglich macht (Vgl. Fig. 2 und 3): Ein im Speicher bevorratetes Stoffpaar aus Ammoniak-Wasser wird über den Wärmetauscher im Kamin vorgewärmt, über eine Lösungspumpe auf ein höheres Druckniveau versetzt und über im Kamin oder extern installierte Solarkollektoren weiter erhitzt. Es wird dann in einem Kocher (z.B. unmittelbar im Solarkollektor) getrennt: Ammoniakdampf entweicht und wird über einen Kondensator verflüssigt. Der Kondensator wird - wie der Wärmetauscher im Kamin - mit dem Lösungsgemisch aus dem Speicher gekühlt. Das flüssige Ammoniak kann als chemisches Speichermedium bei normalem Druck akkumuliert werden. Die arme Lösung (vom Ammoniak getrenntes Wasser) kann über weitere Kollektoren nahe unter 100°C erhitzt und ebenfalls auf normalem Druckniveau dem thermischen Speicher zugefügt werden.

Bei der Entladung kann das gespeicherte Ammoniak verwendet werden, um aus einem Heizungssystem zurücklaufendes Lösungsgemisch von etwa 25°C auf ca. 5° C abzukühlen. Der dabei in einem "Verdampfer A" entstehende Ammoniakdampf wird einem Absorber zugefügt, in welchem es von der armen Lösung aus dem Speicher absorbiert wird. Das Gemisch wird dabei erwärmt und erzeugt eine sinnvolle Vorlauftemperatur für Heizungssysteme. Dies ermöglicht eine Abkühlung des thermischen Speichers auf rund 50° C. Um mit noch niedrigeren Speichertemperaturen weiterzuheizen, kann zusätzlich ein zweiter Verdampfer B" zugeschaltet werden, der über den Wärmetauscher Fermentationswärme als Energie auf Niedrigtemperaturniveau zur Verdampfung nutzt. Der Amoniakspeicher ermöglicht somit die Nutzung der gesamten Temperaturdifferenz zwischen rund 95° und rund 5°C im Gegensatz zu herkömmlichen, thermischen Speichern, die nur bis rund 75°C abkühlen, und entsprechende Wärmeverluste über das ganze Jahr aufweisen. Der thermische Speicher kann somit wesentlich kleiner dimensioniert werden. Zudem kann - wie oben erwähnt- die benötigte Kühlflüssigkeit für den Sommer bevorratet werden.

Für den Betrieb des Verdampfers B" zur Nutzung der beim Fermentationsprozess frei werdenden Energie im Winter kann die Windrichtung im Luftkanal umgekehrt werden, so daß die warme Fermentationsabluft direkt zum Wärmetauscher geleitet und über das noch kühlere Gewächshaus zurückgeführt wird.

Die Integration der Fermentationsanlage zur Kultivierung von belebten, befeuchteten und durchlüfteten Substratschichtungen in das Gebäudesystem ist vorteilhaft, da dadurch in einem geschlossenen Gewächshaussystem eine CO₂ Quelle zur Düngung der Pflanzen vorhanden ist. Ein entscheidender Nebeneffekt liegt in der Realisierung einer idealen Wachstumsumgebung, die hochwertige Fermentationsprozesse erst ermöglicht: Durch den Luftstrom wird die im Gewächshaus befeuchtete, durch Pflanzen mit Sauerstoff angereicherte und anschließend auf für den Fermentationsprozeß ideale Umgebungstemperaturen abgekühlte Luft durch den Raum gezogen und führt die Abfallstoffe des Fermentationsprozesses in Form von Wärme und CO₂ ab.

Im Fermentationsraum kann so pflanzliche Biomasse, z.B. sortierte Fraktionen von Stroh, Schilfstroh, Holzspäne, aber auch von Abfällen aus der Nahrungsmittelproduktion (z.B. Weizenkleie, Reis-, Orangen- oder Kartoffelschalen) durch speziell selektierte Pilzkulturen in Form der Solid-State-Fermentation" umgewandelt werden. Die hier erzeugten Endprodukte sind sehr vielfältig und reichen etwa von Cellulosegrundstoffen (beim Abbau von Lignin) über proteinangereicherte bzw. mit verfügbarem Zucker angereicherte Lebensmittel bis hin zu einem Sortiment hochwertiger Enzyme, Organischer Säuren, Geschmacks- und Geruchsstoffe und anderer Grundchemikalien.

Im Winterbetrieb kann die Kompostierung von (über das Jahr akkumulierter) organischer Abfälle als billiger Energierohstoff zur Beheizung des Systems anstelle des hochwertigen Fermentationsprozesses betrieben werden.

Mit erneuter Bezugnahme auf die Figur 1 wir ein Anwendungsbeispiel beschrieben.

Das Gewächshaus 1 ist auf einer Fläche südlich vor dem Gebäude angeordnet. Die Fermentationsräume 2 sind unter den Gewächshaustischen angeordnet und werden über regelbare Öffnungen 22 an der Tischoberseite entlüftet. Der Solarkamin 5 bestehend aus geschlossenen Metallröhren zur Luftführung mit vorgelagerter, verschließbarer Glaswand 10a/b ist an der Südfassade des Gebäudes angeordnet. Er mündet in einen Luftbefeuchter 8. Hinter dem Kamin liegt ein Rückführschacht mit darin befindlichem Luft-Wasser-Wärmetauscher 7. Solarkollektoren 6 werden extern (oder auch innerhalb des Kamins) angeordnet.

Der Langzeitwärmespeicher 9 ist in Temperatursegmente unterteilt und besitzt einen kalten (-) und einen warmen (+) Pol. Auffangbehälter 4 zum Abschöpfen von entstehendem Kondensat sind unter dem Wärmetauscher, unter dem Kamin und an den Gewächshausaußenseiten angebracht.

Figur 2 zeigt die Beladung eines thermischen Speichers und eines Ammoniakspeichers durch den Wärmetauscher im Luftkanal sowie durch weitere Solarkollektoren. Das kalte Lösungsgemisch 17 wird vom kalten Pol (-) des thermischen Speichers 9 über den Wärmetauscher im Luftkanal 7 sowie über den Kondensator 12 vorgewärmt und anschließend über eine Lösungsmittelpumpe auf ein höheres Druckniveau gehoben. Über Solarkollektoren 6 wird das Gemisch weiter erhitzt. Das Ammoniak verläßt den Austreiber 11 als Dampf 18 und wird im Kondensator 12 verflüssigt. Über ein Ventil wird das flüssige Ammoniak 19 wieder auf den Normaldruck entspannt und wird im Speicher 13 angereichert. Die arme Lösung wird ebenfalls auf Normaldruck entspannt, weiter erhitzt und in dieser Form 20 dem warmen Pol (+) des Wärmespeichers zugeführt.

Figur 2b zeigt die Abkühlung des thermischen Speichers bis auf 5°C zum Betrieb des Luftkreislaufs durch die Erschließung von Restwärme aus dem Heizungsrücklauf und durch die Hinzufügung einer weiteren Niedrigwärmequelle über Ammoniakverdampfer. Die erhitzte, arme Lösung 20 wird einem Heizungssystem zugeführt. Dem Heizungsrücklauf wird Restwärme über einen aus dem Ammoniakspeicher 13 gespeisten Verdampfer 15 entzogen. Der dabei entstehende Ammoniakdampf 18 wird einem Absorber zugeführt, in dem es von der armen Lösung absorbiert wird. Die zugeführte Temperatur aus dem thermischen Speicher 20 kann somit deutlich kühler sein als der eigentliche Heizungsvorlauf und wird entweder bei anfänglich sehr hohen Speichertemperaturen über ein regelbares Rücklaufrohr (21) mit abgekühlter, reicher Lösung verdünnt oder bei stark abgekühltem Speicher über einen zweiten Verdampfer B 19 bei Erschließung einer anderen Niedrigtemperaturquelle vorgewärmt.

## Patentansprüche

1. Anlage zum Überführen und Nutzen von Wärme- und/oder Wasserdampf mit einem Gewächshaus (1), einer Solid-State-Fermentationsanlage (2), einem Solarkamin (5) und einem Wärmetauscher (7) **dadurch gekennzeichnet, dass** diese derart miteinander verbunden sind, dass ein vorzugsweise geschlossener Luftkreislauf (K) gebildet wird, der im wesentlichen durch die im Solarkamin aufsteigende erwärmte und anschließend über den Wärmetauscher abgekühlte und abfallende Luft oder umgekehrt durch im Wärmetauscher erwärmte, aufsteigende und anschließend im Kamin zum Außenraum hin abgekühlte und abfallende Luft in Bewegung gehalten wird, wobei der Wärmetauscher in einem Luftschacht angeordnet ist, der vorzugsweise parallel zu dem Kamin (5) angeordnet ist und die obere Seite des Kamins mit der im Gewächshaus angeordneten Fermentationsanlage verbindet und der Kamin (5) ein unteres und ein oberes Ende aufweist und das untere Kaminende in das Gewächshaus (1) vorzugsweise an der höchsten Stelle im Bereich des Gewächshausdaches mündet.

2. Anlage nach Anspruch 1, wobei das obere Ende des Kamins (5) mit einem oberen Ende des Luftschachts für den Wärmetauscher (7) über einen Kanal in Verbindung steht und vorzugsweise in diesem Verbindungskanal ein Luftbefeuchter (8) angeordnet ist.

3. Anlage nach einem der vorstehenden Ansprüche, wobei der Solarkamin einen sonnenexponierten Luftschacht aus vorzugsweise geschlossenen Metallröhren aufweist und in einem Raum mit einer auf der Sonnenseite ausgebildeten Glaswand angeordnet ist, wobei die Glaswand mindestens ein Element aufweist, das mit einer zugehörigen Antriebseinrichtung geöffnet werden kann.

4. Anlage nach einem der vorstehenden Ansprüche, wobei der Wärmetauscher (7) ein Luft-Flüssigkeit-Wärmetauscher ist und vorzugsweise die Flüssigkeit ein Wasser-Ammoniak-Gemisch (17) ist.

5. Anlage nach einem der vorstehenden Ansprüche mit mindestens einem Solarkollektor (6), der mit einem ersten Ende des Wärmetauschers (7) verbunden ist, wobei der Solarkollektor vorzugsweise in dem Raum angeordnet ist, in dem der Kamin (5) angeordnet ist.

6. Anlage nach einem der vorstehenden Ansprüche mit einem thermischen Speicher (9), der mit einem ersten Anschluß mit dem ersten Ende des Wärmetauschers (7) direkt oder über mindestens einen Solarkollektor (6) verbunden ist und mit einem zweiten Anschluß mit einem zweiten Ende des Wärmetauschers verbunden ist.

7. Anlage nach einem der vorstehenden Ansprüche, wobei zwischen dem ersten Anschluß des thermischen Speichers (9) und dem ersten Ende des Wärmetauschers (7) bzw. dem Solarkollektor (6) ein Austreiber (11) angeordnet ist, an dem ein Kondensator (12) angeschlossen ist, der Kondensator mit einem Speicher (13) verbunden ist, wobei der Austreiber (11) zur Trennung eines Stoffgemisches, insbesondere eines Wasser-Ammoniak-Gemisches durch Verdampfen des Ammoniaks (18) dient und in dem Kondensator (12) flüssiges Ammoniak gebildet wird, das in dem Speicher (13) gespeichert wird und wobei die erhitze arme Lösung (20) von dem Austreiber (11) zum thermischen Speicher (9) geleitet wird.

8. Anlage nach einem der vorstehenden Ansprüche, wobei der Wärmetauscher (7) mit einem zweiten Verdampfer (16) verbunden ist, der zweite Verdampfer (16) mit dem Speicher (13) verbunden ist und vorzugsweise von dem Speicher geliefertes Ammoniak (19) verdampft und mit einem Absorber (14), der mit dem ersten Anschluß des thermischen Speichers (9) verbunden ist und dem das verdampfte Ammoniak (18) zugeführt wird, wobei in dem Absorber (14) der Ammoniakdampf und die arme Lösung wieder vereinigt wird.

9. Anlage nach einem der vorstehenden Ansprüche mit einem Verbraucher (3), dessen Einlaß mit dem Ausgang des Absorbers (14) verbunden ist und dessen Auslaß mit dem Eingang des Absorbers verbunden ist und direkt bzw. über einen zweiten Verdampfer (15) mit dem zweiten Anschluß des thermischen Speichers (9) verbunden ist.

10. Anlage nach einem der vorstehenden Ansprüche mit mindestens einer Auffangeinrichtung mit Sammelbehälter (4) für Kondenswasser, die unterhalb des Wärmetauschers (7) und/oder am unteren Ende des Kamins (5) und/oder an Außenwänden des Gewächshauses (1) angeordnet sind zum Auffangen des entstehenden Kondensats und zur Weiterführung in Speichertanks.

11. Anlage nach einem der vorstehenden Ansprüche, wobei die Fermentationsanlage (2) mehrere belebte, befeuchtete und belüftete Substratschichtungen (2) aufweist, die vorzugsweise unter Gewächshaustischen angeordnet sind, und bei der vorzugsweise an der Oberseite der Gewächshaustische regelbare Lüftungsschlitze (22) angeordnet sind.

12. Anlage nach einem der vorstehenden Ansprüche mit einer Vorrichtung zur Steuerung der Anlage insbesondere der Fermentationsprozesse sowie der Gewächshausvegetation durch Steuern mindestens eines Temperaturreglers am Wärmetauscher (7) und/oder eines Reglers zur Öffnung von Lüftungsklappen an der Gewächshaustischoberseite (22) und/oder eines Reglers zum Öffnen der Elemente an der Glaswand im Bereich des Kamins (5) und/oder zum Regulieren der Befeuchtungsintensität des Luftbefeuchters (8), - und/oder der Gewächshausvegetation, - und/oder der Fermentationssubstrate.

13. Verfahren zum Überführen und Nutzen von Wärme und/oder Wasserdampf bei einer Anlage nach einem der vorstehenden Ansprüche, wobei infolge von Sonneneinstrahlung ein temperaturbedingter Luftauftrieb aus dem Gewächshaus (1) in den Kamin (5) entsteht und durch eine anschließende in dem Wärmetauscher (7) hervorgerufene Abkühlung die Luft zu der Fermentationsanlage (2) geleitet wird und über regelbare Lüftungsschlitze die Luft zurück in den Vegetationsbereich des Gewächshauses geleitet wird.

14. Verfahren nach Anspruch 13, wobei der thermische Speicher (9) direkt über den Wärmetauscher (7) entladen wird und der Luftkreislauf umgekehrt wird zur Erzielung von Kondensationserträgen an den Metallröhren des Kamins bei vorzugsweise geöffneter Glaswand (10b) und an den Gewächshausaußenflächen im kalten Abschnitt der Tages- oder Jahresperiode.

15. Verfahren nach einem der vorstehenden Ansprüche 13 und 14, wobei der Luftbefeuchter (8) mit Meer-, Brack- oder Abwasser gespeist wird und vorzugsweise in Form eines berieselten Gesteinsbettes zur Nachbefeuchtung der beim Auftrieb erhitzten Luft dient und vorzugsweise dadurch die erzielbare Kondensation zur Wassergewinnung optimiert wird.

16. Verfahren nach einem der Ansprüche 13 bis 15, wobei zur thermischen Nutzung der einfallenden Sonnenenergie die Glaswand (10a) geschlossen ist und zur Abführung von Wärme zur Wasserkondensation die Glaswand (10b) geöffnet ist.

17. Verfahren nach einem der Anspruch 13 bis 16, wobei die Speicherung der weiter erhitzten armen Lösung in den thermischen Speicher (9) und/oder die Beladung des Amoniakspeichers (13) im warmen Abschnitt der Tages- oder Jahresperiode erfolgt.

18. Verfahren nach einem der Ansprüche 13 bis 17, wobei währende des kalten Abschnitts der Tages- oder Jahresperiode eine weitere Abkühlung des im Verbraucher (3) erkalteten Stoffgemisches bis auf vorzugsweise 5°C in einem ersten Verdampfer (15) erfolgt und der thermische Speicher (9) mit Kühlmittel in Form von kalter reicher Lösung (17) beladen wird und/oder die Fermentationsabwärme bzw. eine weitere Energiequelle auf Niedrigtemperaturniveau in einem zweiten Verdampfer (16) erschlossen wird.

19. Verfahren nach einem der Ansprüche 13 bis 18, wobei die Prozesse in der Anlage, insbesondere die Fermentationsprozesse und/oder die Wachstumsprozesse der Gewächshausvegetation gesteuert werden, wobei insbesondere die Temperatur am Wärmetauscher (7) geregelt wird und/oder die Öffnung der Lüftungsklappen an der Gewächshaustischoberseite (22) geregelt wird und/oder die Öffnung der Glaswand (10b) geregelt wird und/oder die Befeuchtungsintensität des Luftbefeuchters (8) -und/oder der Gewächshausvegetation -und/oder der Fermentationssubstrate geregelt wird.

## Claims

1. Device for transferring and using heat and/or water vapour with a greenhouse (1), a solid-state fermentation unit (2), a solar chimney (5), and a heat exchanger (7) which are connected with one another in such a way as to create a (preferably closed) air circuit (K) which is kept in motion essentially by warm air rising up the solar chimney and then falling again after cooling in the heat exchanger, or in the reverse case, by air warmed and drawn up by the heat exchanger which then falls and cools in the chimney, releasing heat to the outside, whereby the heat exchanger is located in an air duct, preferably installed parallel to the solar chimney (5), that links the upper end of the chimney to the fermentation unit and whereby the solar chimney (5) has a lower and an upper end and where the lower end opens into the greenhouse (1) preferably at the highest point of the greenhouse roof.

2. Device as claimed in Claim 1, where the upper end of the solar chimney (5) is connected to the upper end of the heat exchanger (7) by a connecting duct and where this connecting duct preferably contains a humidifier (8).

3. Device, as claimed in one of the above-listed claims, where the solar chimney features an air duct exposed to the sun, preferably made of closed metal tubes and housed in a glazed south-facing enclosure, whereby the glass wall should feature at least one element that can be opened by means of a corresponding drive unit.

4. Device, as claimed in one of the above-listed claims, where the heat exchanger (7) is an air-liquid heat exchanger, preferably with a water-ammonia mix (17) as the cooling agent.

5. Device, as claimed in one of the above-listed claims, with at least one solar collector (6) that is connected to a first end of the heat exchanger (7) and preferably located in the same enclosure as the solar chimney (5).

6. Device, as claimed in one of the above-listed claims, with a heat accumulator with a first connection linked directly or via at least one solar collector (6) to a first end of the heat exchanger (9) and a second connection linked to a second end of the heat exchanger.

7. Device, as claimed in one of the above-listed claims, where a generator/separator . (11) is positioned between a first connection to the heat accumulator (7) or solar collector (6) and the first end of the heat exchanger (7), and where the generator/separator is connected to a condenser (12) which in turn is connected to an accumulator (13), and where the generator/separator (11) serves to separate a mixture of substances, in particular a water-ammonia mix by vaporization of the ammonia (18) and where liquid ammonia is formed in the condenser (12) that is then stored in the accumulator (13), and where the heated weak solution (20) is channeled from the generator/separator (11) to the heat accumulator (9).

8. Device, as claimed in one of the above-listed claims, where the heat exchanger (7) is connected to a second vaporizer (16) which is in turn connected to the accumulator (13) and which preferably vaporizes ammonia (19) supplied by the accumulator, and to an absorber (14) which is connected to the first connection of the heat accumulator (9) and which receives the vaporized ammonia (18), whereby the ammonia vapor and the weak solution are recombined in the absorber (14).

9. Device, as claimed in one of the above-listed claims, featuring a heater (3) whose input is connected to the output of the absorber (14) and whose output is connected to the input of the absorber, and which is connected directly or via a second vaporizer (15) with the second connection of the heat accumulator (9).

10. Device, as claimed in on one of the above-listed claims, featuring at least one catchment device with a collection container (4) for condensation, located underneath the heat exchanger (7) and/or at the lower end of the solar chimney (5) and/or on the outer walls of the greenhouse (1) to collect condensation and channel it into storage tanks.

11. Device, as claimed in one of the above-listed claims, where the fermentation unit (2) contains several cultivated, irrigated and ventilated substrate layers (2), preferably positioned under greenhouse tables with adjustable ventilation slots (22) in their upper surfaces.

12. Device, as claimed in one of the above-listed claims, featuring control equipment, especially for the control of fermentation processes and of the vegetation in the greenhouse by adjustment of at least one temperature control on the heat exchanger (7) and/or variable opening of the ventilation slots on the upper surface of the greenhouse tables (22) and/or a device to control the openings in the glass wall in front of the solar chimney (5) and/or control humidity levels in the humidifier (8) and/or the greenhouse vegetation and/or the fermentation substrates.

13. Method for the conversion and use of heat and/or vapor in a device based on one of the above-listed claims, where solar irradiation causes heated air to rise out of the greenhouse (1) into the solar chimney (5) before being cooled in the heat exchanger (7) and channeled back into a fermentation unit (2), where the air is then fed back into the vegetation area of the greenhouse through adjustable ventilation slots.

14. Method, as claimed in Claim 13, where the heat accumulator (9) is discharged directly via the heat exchanger (7) and where the circuit is reversed in the cold periods of the day or season to obtain condensation on the metal pipes of the solar chimney, preferably with the glass wall open (10b), and on the outer surfaces of the greenhouse.

15. Method, as claimed in one of the above-listed claims 13 and 14, where the humidifier (8) is fed with sea water, brackish water or wastewater and is used, preferably in the form of a sprinkled gravel bed, to rehumidify the heated rising air, thus maximizing condensation as a source of water.

16. Method as claimed in one of the claims 13-15, where the glass wall is shut (10a) to collect incoming solar energy for heat and where the glass wall is opened (10b) to release heat during condensation.

17. Method as claimed in one of the claims 13-16, where storage of the heated weak solution in the heat accumulator (9) and/or charging of the ammonia accumulator (13) takes place during the warm period of the day or season.

18. Method, as claimed in one of the claims 13-17, where, during the cold period of the day or season, further cooling of the mixture previously cooled in the heater (3), preferably to 5 C, is achieved in a first vaporizer (15), and where the heat accumulator (9) is charged via cooling agent in the form of cold strong solution (17) and/or the heat given off by fermentation or another low-temperature energy source is captured in a second vaporizer (16).

19. Method, as claimed in one of the claims 13-18, where the processes involved, especially the fermentation processes and/or the growth processes of the greenhouse vegetation, are controlled, in particular by adjusting the temperature via the heat exchanger (7) and/or by adjusting the ventilation slots in the upper surface of the greenhouse tables (22) and/or by opening the glass wall (10b) and/or by adjusting the level of humidity at the humidifier (8) and/or at the greenhouse vegetation and/or at the fermentation substrates.

## Revendications

1. Appareil destiné au transfert et l'usage de la chaleur et/ou de la vapeur d'eau avec une serre (1 ), un appareil pour fermentation à l'état solide (2), une cheminée solaire (5) et un échangeur thermique (7), installations étant raccordées de sorte qu'il y ait formation d'un circuit d'air (K) de préférence fermé qui est maintenu principalement en mouvement par l'air réchauffé montant dans la cheminée et refroidi ensuite par l'échangeur thermique dans lequel il retombe ou bien inversement le mouvement est assuré par l'air réchauffé montant dans l'échangeur thermique, se refroidissant en retombant ensuite dans la cheminée au contact de l'espace extérieur, et dans ce processus, l'échangeur thermique est adapté à une conduite d'air installée de préférence parallèlement à la cheminée (5) liant la partie supérieure de celle-ci à l'appareil de fermentation installé dans la serre, la cheminée (5) ayant une extrémité supérieure et une extrémité inférieure, la partie inférieure de la cheminée dans la serre (1 ) débouchant de préférence dans la partie la plus haute du toit de la serre.

2. Appareil selon la revendication n° 1 dans lequel l'extrémité supérieure de la cheminée (5) est reliée par un canal à une extrémité supérieure de la conduite d'air pour l'échangeur thermique (7), un humidificateur (8) ayant été installé de préférence dans ce canal de liaison.

3. Appareil selon l'une des revendications nommées ci-dessus dont la cheminée solaire de cet appareil dispose d'une conduite d'air dont les tuyaux métalliques sont de préférence fermés, et celle-ci est exposée au soleil et possède une cavité dont la paroi de verre est orientée vers le côté soleil et cette paroi de verre est pourvue au moins d'un élément que l'on peut ouvrir à l'aide d'un mécanisme moteur adéquat.

4. Appareil selon l'une des revendications nommées ci-dessus dont l'échangeur thermique (7) est destiné à l'échange de l'air et du liquide lequel consiste de préférence en un mélange d'eau et d'ammoniaque (17).

5. Appareil selon l'une des revendications nommées ci-dessus avec au moins un collecteur solaire relié à la première extrémité de l'échangeur thermique (7) et installé de préférence dans l'espace où la cheminée (5) est placée.

6. Appareil selon l'une des revendications nommées ci-dessus avec un accumulateur thermique (9) relié directement à la première extrémité de l'échangeur thermique par un premier raccordement ou par au moins un collecteur solaire (6) et par un second raccordement avec la deuxième extrémité de l'échangeur thermique (7).

7. Appareil selon l'une des revendications nommées ci-dessus comprenant un expulseur (11) installé entre le premier raccordement du accumulateur thermique (9) et la première extrémité de l'échangeur thermique (7) ou le collecteur solaire (6), et raccordé à un condensateur (12), le condensateur étant lui relié à un collecteur (13) et cet expulseur (11) servant à séparer un mélange de substances, en particulier un mélange d'eau et d'ammoniaque par évaporation de l'ammoniac (18), de l'ammoniaque liquide se formant dans le condensateur (12) et étant recueilli dans le collecteur (13), la solution appauvrie et chauffée (20) étant ainsi conduite de l'expulseur (11) à l'accumulateur thermique (9).

8. Appareil selon l'une des revendications nommées ci-dessus dans lequel. l'échangeur thermique (7) est relié à un deuxième évaporateur (16), celui-ci (16) est relié au collecteur (13) et l'ammoniaque livrée par le collecteur (19) se dégage de préférence de ce collecteur étant relié à un absorbeur (14) qui lui-même relié au premier raccordement de l'accumulateur thermique (9) vers lequel les vapeurs d'ammoniac (18) sont dirigées et elles seront à nouveau réunies dans l'absorbeur (14) avec la solution appauvrie.

9. Appareil selon l'une des revendications nommées ci-dessus, étant relié à un récepteur (3) dont l'entrée est reliée à la sortie de l'absorbeur (14) et dont la sortie est reliée à l'entrée de l'absorbeur, lui-même relié directement ou par l'intermédiaire d'un deuxième évaporateur (15) avec le deuxième raccordement de l'accumulateur thermique (9).

10. Appareil selon l'une des revendications nommées ci-dessus avec au moins un appareil collecteur avec récipient collecteur (4) pour l'eau de condensation, appareils étant installés sous l'échangeur thermique (7) et/ou à l'extrémité inférieure de la cheminée (5) et/ou aux parois extérieures de la serre (1) pour la réception du condensat pour assurer sa transmission dans les réservoirs collecteurs.

11. Appareil selon l'une des revendications nommées ci-dessus dont l'appareil de fermentation (2) possède plusieurs couches de substrat animées, humidifiées et aérées (2), étant installées de préférence sous des supports de serre, appareil de fermentation possédant également des grilles d'aération réglables (22) et installées de préférence sur la partie supérieure des supports de serre.

12. Appareil selon l'une des revendications nommées ci-dessus avec un appareil de contrôle pour la commande de l'appareil, en particulier pour le contrôle des processus de fermentation ainsi que pour le contrôle de la végétation de la serre par le réglage d'au moins un régleur de température sur l'échangeur thermique (7) et/ou d'un régleur pour l'ouverture des clapets de ventilation de la partie supérieure du support de serre (22) et/ou d'un régleur pour l'ouverture des éléments de la paroi de verre au niveau de la cheminée (5) et/ou pour le réglage du grade d'humidification de l'humidificateur (8) et/ou pour la régulation de la végétation de la serre et/ou des substrats de fermentation.

13. Méthode pour le transport et l'utilisation de la chaleur et/ou de la vapeur d'eau pour un appareil correspondant à l'une des revendications nommées ci-dessus dans le l'action du soleil provoque une montée d'air due à une augmentation de la température allant de la serre (1 ) à la cheminée (5) et qui est transmis dans l'appareil de fermentation (2) par un refroidissement provoqué dans l'échangeur thermique (7) et est reconduit dans la zone de végétation de la serre par les grilles d'aération réglables.

14. Méthode selon la revendication n° 13 dans lequel l'accumulateur thermique (9) est déchargé directement par l'échangeur thermique (7) et le circuit d'air est renversé pour obtenir de la condensation sur les tuyaux métalliques de la cheminée, la paroi de verre étant de préférence ouverte (10b), ainsi que sur les surfaces extérieures de la serre pendant les périodes froides de la journée ou de l'année.

15. Méthode selon l'une des revendications n^{os} 13 et 14 dans lequel l'humidificateur (8) est alimenté d'eau de mer, d'eaux saumâtres ou d'eaux usées et servant à l'humidification postérieure de l'air qui se réchauffe en montant, cet humidificateur se présentant de préférence sous forme d'un lit de pierres irrigué, procédé servant ainsi à optimiser la condensation pour l'obtention d'eau.

16. Méthode selon l'une des revendications n^{os} 13 à 15 dans lequel la paroi de verre (10a) est fermée afin de permettre l'utilisation thermique de l'énergie solaire et dans lequel la paroi de verre (10b) est ouverte pour le dégagement de la chaleur destiné à la formation de condensation d'eau.

17. Méthode selon l'une des revendications n^{os} 13 à 16 permettant l'accumulation de la solution appauvrie et chauffée dans l'accumulateur thermique (9) et/ou le chargement du collecteur d'ammoniaque (13) pendant les périodes chaudes de la journée ou de l'année.

18. Méthode selon l'une des revendications n^{os} 13 à 17 dans lequel un nouveau refroidissement du mélange de substances refroidi dans le consommateur (3) et descendant jusqu'à une température préférentielle de 5 C se produit dans le premier évaporateur (15) pendant les périodes froides de la journée ou de l'année et dans lequel l'accumulateur thermique (9) est chargé d'un produit de refroidissement sous forme d'une solution froide et enrichie (17) et/ou la chaleur issue de la fermentation ou d'une autre source d'énergie est exploitée à température basse dans un deuxième évaporateur (16).

19. Méthode selon l'une des revendications n^{os} 13 à 18 réglant les processus de l'appareil, en particulier le processus de fermentation et/ou les processus de croissance de la végétation de la serre, réglant en particulier la température dans l'échangeur thermique (7) et/ou réglant l'ouverture du clapet de ventilation à la partie supérieure du support de serre (22) et/ou réglant l'ouverture de la paroi de verre (10b) et/ou réglant également le degré d'humidification de l'humidificateur (8) et/ou de la végétation de la serre et/ou des substrats de fermentation.
